# EUROPEAN PATENT APPLICATION

(11) **EP 4 556 436 A1**
(43) Date of publication of application: **21.05.2025**
(21) Application number: 22951248.8
(22) Date of filing: 18.07.2022
(51) Int. Cl.: C01B 3/34, C25B 1/04, C25B 15/08

(54) **SYSTEM FOR GENERATION OF BLUE HYDROGEN THROUGH NATURAL GAS REFORMING, CARBON DIOXIDE CAPTURE, CARBON RESOURCE UTILIZATION, AND REACTION PRODUCT STORAGE, AND METHOD THEREFOR**

(30) Priority: 12.07.2022 KR 20220085591
(71) Applicant: Lowcarbon Co., Ltd., Seongjeon-myeon, Gangjin-gun Jeollanam-do 59205 (KR)
(72) Inventor: LEE, Cheol, Cheongju-si, Chungcheongbuk-do 28709 (KR)
(74) Representative: M. Zardi & Co S.A.
(86) International application number: PCT/KR2022/010411
(87) International publication number: WO 2024/014593

(57) **Abstract**

The present disclosure relates to a system for generation of blue hydrogen through natural gas reforming, carbon dioxide capture, carbon resource utilization, and reaction product storage. According to an embodiment of the present invention, the system comprises: a natural gas storage container for storing liquefied natural gas (LNG) including shale gas; a hydrocarbon reformer in which a gas mixture containing hydrogen and carbon dioxide is produced by a reaction between water supplied from outside and the natural gas or shale gas supplied from the natural gas storage container; a hydrogen filling station in which hydrogen produced from the hydrocarbon reformer is received and stored; a reactor in which carbon dioxide produced from the hydrocarbon reformer is received and reacted with a basic alkali mixed solution to capture carbon dioxide, and a reaction product comprising the captured carbon dioxide is collected, and a carbon dioxide reaction product and a waste solution are separated from the reaction product; a carbon resource storage container storing the carbon dioxide product separated from the reactor; and a hydrogen generator in which the carbon dioxide reaction product separated from the reactor is directly received or the carbon dioxide reaction product received via the carbon resource storage container is used to product hydrogen, and the produced hydrogen is delivered to the hydrogen filling station.

## Description

### Technical Field

The present disclosure relates to a system for generation of blue hydrogen through natural gas reforming, carbon dioxide capture, carbon resource utilization, and reaction product storage, and a method therefor. More particularly, the present disclosure relates to a system and method for generation of blue hydrogen through natural gas reforming, carbon dioxide capture, carbon resource utilization, and reaction product storage, the system and method being configured such that natural gas containing shale gas is reformed so that carbon dioxide is not discharged to the atmosphere and carbon dioxide is collected and converted into a carbon resource, thereby increasing the reforming efficiency of a source gas and also capable of realizing multi-dimensional production of eco-friendly blue hydrogen and storing a carbon dioxide reaction product.

### Background Art

Recently, as climate change has emerged as a global issue, individual countries have been responding more actively, and major countries are introducing various policies for reducing greenhouse gases. As the Kyoto Protocol officially begins, Korea is in a situation in which it is impossible to avoid the obligation to reduce greenhouse gas emissions, but it is insufficient to reverse the increasing trend of greenhouse gas emissions.

In such a situation, as the demand for the research and development of alternative energy due to global warming and the depletion of fossil fuels is continuously increasing, hydrogen energy is attracting attention as the only practical alternative to solving the environmental and energy problem.

Hydrogen is an important chemical used in energy, refining, fine chemistry, and petrochemical processes. Typically, hydrogen is used in various refinery processes. Recently, as the transition of the fossil fuel-based economy to a hydrogen economy society has begun, the process development of a reformer for a small fuel cell, a hydrogen station for a fuel cell vehicle, and a chemical plant for large-scale hydrogen production is attracting attention.

Representatively, in methods of producing hydrogen, the importance of water electrolysis technology that uses electric energy to produce hydrogen from pure water is emerging.

The conventional water electrolysis technology basically includes an external power source, an anode, and a cathode, and has a structure in which oxygen (O₂) is generated by oxidation at the anode and hydrogen (H₂) is generated by reduction at the cathode when electricity is applied from the external power source. That is, the conventional water electrolysis technology may be viewed as a process of electrolyzing water and decomposing water into hydrogen and oxygen.

At this time, in a cathode of the conventional water electrolysis technology, OH- radicals are generated as a reaction product during a reduction process, and water (H₂O) is generated since OH- radicals easily recombine with oxygen (O₂) generated through oxidation at an anode and hydrogen (H₂) generated through reduction at the cathode, so that there is a problem the hydrogen (H₂) generation efficiency is reduced as a result.

Meanwhile, in terms of economic efficiency of hydrogen production, a steam reforming method in which a water gas is generated by reforming a natural gas containing hydrocarbon such as methane by applying a high temperature and high pressure water vapor and the generated water gas processed by a Pressure Swing Adsorption (PSA) process so that hydrogen is separated and generated is developed and distributed.

However, since carbon dioxide generated together with hydrogen during the PSA process is discharged into the atmosphere (commonly referred to as "gray hydrogen"), there is a limit to reducing greenhouse gas emissions.

Therefore, in order to reduce greenhouse gases, a "blue hydrogen" technology that collects and removes carbon dioxide generated during hydrogen production so that carbon dioxide is not discharged into the atmosphere is emerging as a realistic alternative.

### Disclosure

### Technical Problem

Accordingly, the present disclosure has been made keeping in mind the above problems occurring in the related art, and an objective of the present disclosure is to provide a system and method for generation of eco-friendly blue hydrogen for reducing carbon dioxide generated during a process of reforming natural gas typically containing shale gas.

In addition, another objective of the present disclosure is to provide a system and method for generation of blue hydrogen through natural gas reforming, carbon dioxide capture, carbon resource utilization, and reaction product storage, the system and method being capable of converting carbon dioxide into other useful materials while carbon dioxide is removed at the same time by capturing carbon dioxide in a water gas and converting carbon dioxide into a carbon resource by using a basic alkali mixed solution.

In addition, still another objective of the present disclosure is to provide a system and method for generation of blue hydrogen through natural gas reforming, carbon dioxide capture, carbon resource utilization, and reaction product storage, the system and method being capable of utilizing carbon dioxide to the maximum extent compared to that of a conventional technology and being also capable of increasing the generation efficiency of blue hydrogen since hydrogen is generated by utilizing a carbon dioxide reaction product converted into a carbon resource and the generated hydrogen is supplied to a hydrogen filling station again.

In addition, yet another objective of the present disclosure is to provide a system and method for generation of blue hydrogen through natural gas reforming, carbon dioxide capture, carbon resource utilization, and reaction product storage, the system and method being capable of generating hydrogen more than that of a conventional water electrolysis technology since a carbon dioxide reaction product converted into a carbon resource is utilized as an electrolyte.

The technical problems to be solved by the present disclosure are not limited to the above-mentioned problems, and other problems which are not mentioned will be clearly understood by those skilled in the art from the following description.

### Technical Solution

In order to achieve the objectives of the present disclosure, according to an aspect of the present disclosure, there is provided a system for generation of blue hydrogen through natural gas reforming, carbon dioxide capture, carbon resource utilization, and reaction product storage, the system including: a natural gas storage container configured to store Liquefied Natural Gas (LNG) containing shale gas; a hydrocarbon reformer configured to generate a gas mixture containing hydrogen and carbon dioxide by a reacting water supplied from outside and natural gas or shale gas supplied from the natural gas storage container to each other; a hydrogen filling station configured to receive and store hydrogen generated from the hydrocarbon reformer; a reactor configured to capture carbon dioxide by receiving carbon dioxide generated from the hydrocarbon reformer and reacting the carbon dioxide with a basic alkali mixed solution, the reactor being configured to collect a reaction product containing the captured carbon dioxide, and the reactor being configured to separate a carbon dioxide reaction product and a waste solution from the reaction product; a carbon resource storage container configured to store the carbon dioxide reaction product separated from the reactor; and a hydrogen generator configured to generate hydrogen by using the carbon dioxide reaction product which is separated from the reactor and which is directly transferred to the hydrogen generator or by using the carbon dioxide reaction product transferred to the hydrogen generator via the carbon resource storage container, the hydrogen generator being configured to transfer the produced hydrogen to the hydrogen filling station.

In addition, according to an aspect, the hydrocarbon reformer may include: an extraction mechanism for extracting or separating hydrogen and carbon dioxide from the gas mixture; and a transfer mechanism for supplying hydrogen extracted from the extraction mechanism to the hydrogen filling station and for supplying carbon dioxide separated from hydrogen from the generated gas mixture to the reactor.

In addition, according to an aspect, the reactor may include: a mixer configured to supply the basic alkali mixed solution; an absorption column configured to capture carbon dioxide by reacting the basic alkali mixed solution supplied from the mixer with carbon dioxide transferred from the hydrocarbon reformer; a separator configured to collect the reaction product containing carbon dioxide captured in the absorption column and configured to separate the carbon dioxide reaction product and the waste solution from the reaction product; and the carbon resource storage container configured to store the separated carbon dioxide reaction product for utilizing the separated carbon dioxide reaction product.

In addition, according to an aspect, the mixer may be configured to generate the basic alkali mixed solution by mixing a basic alkaline solution supplied from a basic alkaline solution storage with water supplied from a water supply source.

In addition, according to an aspect, the basic alkaline solution and water may be mixed in a ratio of 1:1 to 1:5.

In addition, according to an aspect, an average pH of the basic alkali mixed solution may be pH 12 to pH 13.5.

In addition, according to an aspect, the basic alkali mixed solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, the absorption column may be configured to supply the basic alkali mixed solution from the mixer by using a plurality of nozzles mounted on an upper portion of the absorption column.

In addition, according to an aspect, the basic alkali mixed solution may be input by being adjusted through a valve in the mixer when a level of the basic alkali mixed solution in the absorption column is lowered to less than 90%, and inputting of the basic alkali mixed solution may be stopped and, at the same time, a basic alkaline solution and water may be mixed until a pH of the basic alkali mixed solution becomes pH 12 to pH 13.5 when the level of the basic alkali mixed solution becomes 100%.

In addition, according to an aspect, the absorption column may be configured to capture carbon dioxide by reacting the basic alkali mixed solution supplied from the mixer with carbon dioxide which is transferred from the hydrocarbon reformer and in which micro bubbles are formed by allowing carbon dioxide to pass through a bubbler formed on a lower portion of the absorption column.

In addition, according to an aspect, the reactor may include: a monitoring part configured to monitor a level and a pH of the basic alkali mixed solution in the absorption column; and a controller configured to adjust a supply amount of the basic alkali mixed solution by the monitoring part.

In addition, according to an aspect, the carbon dioxide reaction product may include sodium carbonate (Na₂CO₃) or sodium bicarbonate (NaHCO₃).

In addition, according to an aspect, the hydrogen generator may include: a water electrolysis cell configured to generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor.

In addition, according to an aspect, the carbon resource storage container may include: a storage tank having a double wall structure of an inner wall and an outer wall so as to accommodate the carbon dioxide reaction product separated from the reactor; an inlet unit connected to the storage tank and configured to load the carbon dioxide reaction product into the storage tank; a discharge unit connected to the storage tank and configured to discharge the carbon dioxide reaction product in the storage tank; and a control unit configured to control the inlet unit or the discharge unit during loading/unloading of the carbon dioxide reaction product.

In addition, according to an aspect, the inlet unit may include: an inlet valve configured to open and close a flow path for the carbon dioxide reaction product that is loaded inside the storage tank, thereby adjusting a flow rate of the carbon dioxide reaction product that is loaded; an inlet flow rate sensor configured to measure the carbon dioxide reaction product loaded by the inlet valve and to generate a flow rate value; and an inlet line connected to the storage tank so as to load the carbon dioxide reaction product.

In addition, according to an aspect, the discharge unit may include: a discharge line connected to the storage tank and configured to discharge the carbon dioxide reaction product to an outside of the storage tank; a discharge pump provided on the discharge line and configured to forcibly discharge the carbon dioxide reaction product contained in the storage tank to the outside; a discharge valve configured to open and close a flow path toward the discharge pump for the carbon dioxide reaction product accommodated in the storage tank; and a vacuum pump connected to the discharge line between the storage tank and the discharge valve and configured to discharge air in the storage tank to the outside and to form a vacuum state.

In addition, according to an aspect, the inner wall of the storage tank may include: a level sensor configured to measure a level of the carbon dioxide reaction product loaded in the storage tank and to input a sensing value to the control unit; and a pressure sensor configured to measure a pressure of the storage tank and to input a sensing value to the control unit.

In addition, according to an aspect, when the sensing value of the level sensor falls below a predetermined value, the control unit may control the inlet valve such that the inlet valve is opened so that the carbon dioxide reaction product is loaded through the inlet line.

In addition, according to an aspect, when the sensing value of the level sensor reaches a predetermined target level value or when the flow rate value measured by the inlet flow rate sensor reaches a predetermined target flow rate, the control unit may close the inlet valve so that the flow path introduced into the storage tank is blocked.

In addition, according to an aspect, when the control unit receives a discharge signal of the carbon dioxide reaction product accommodated inside the storage tank, the control unit may control the discharge valve and the discharge pump so that the discharge valve is opened and the discharge pump is operated.

In addition, according to an aspect, when the flow path of the carbon dioxide reaction product loaded inside the storage tank is opened and closed according to a flow path opening and closing operation of the inlet valve, a vacuum state inside the storage tank may be released, so that the control unit may drive a vacuum pump so that the sensing value of the pressure sensor reaches a target vacuum pressure.

Meanwhile, in order to achieve the objectives of the present disclosure, according to an aspect of the present disclosure, there is provided a method for generation of blue hydrogen through natural gas reforming, carbon dioxide capture, carbon resource utilization, and reaction product storage, the method including: a process A in which a natural gas storage container liquefies and stores a source gas containing shale gas; a process B in which a hydrocarbon reformer reacts water input from outside with the source gas stored in the natural gas storage container so as to generate a gas mixture containing hydrogen and carbon dioxide and separates hydrogen in the gas mixture and then transfers hydrogen to a hydrogen filling station; a process C in which a reactor captures carbon dioxide by reacting a basic alkali mixed solution with carbon dioxide generated from the hydrocarbon reformer in the process B and collects a reaction product containing the captured carbon dioxide; a process D in which a hydrogen generator generates hydrogen by using the reaction product containing carbon dioxide captured by the reactor and transfers hydrogen to the hydrogen filling station; and a process E in which a carbon resource storage container stores the reaction product containing carbon dioxide captured by the reactor or supplies the reaction product to the hydrogen generator so as to generate hydrogen.

In addition, according to an aspect, in the process B, the gas mixture containing hydrogen and carbon dioxide may be generated by a steam reforming reaction by the hydrocarbon reformer.

In addition, according to an aspect, in the process C, the basic alkali mixed solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, in the process C, the reactor may capture carbon dioxide by reacting carbon dioxide transferred from the hydrocarbon reformer with the basic alkali mixed solution supplied from a mixer, may collect the reaction product containing the captured carbon dioxide, and may separate a carbon dioxide reaction product and a waste solution from the reaction product.

In addition, according to an aspect, the process C may include: a process in which the basic alkali mixed solution is input by being adjusted through a valve in a mixer when a level of the basic alkali mixed solution in the reactor is lowered to less than 90% and in which inputting of the basic alkali mixed solution is stopped and, at the same time, a basic alkaline solution and water are mixed until a pH of the basic alkali mixed solution becomes pH 12 to pH 13.5 when the level of the basic alkali mixed solution becomes 100%.

In addition, according to an aspect, in the process D, the hydrogen generator may generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the reaction product containing carbon dioxide captured by the reactor.

### Advantageous Effects

According to embodiments of the present disclosure, the following effects may be realized. However, the embodiments may not include all these effects, and the claim scope of the present disclosure is not construed as being limited thereto.

According to an embodiment of the present disclosure, since carbon dioxide generated after reforming of natural gas containing shale gas is captured and converted into a carbon resource, there are effects that high purity blue hydrogen may be generated while carbon dioxide is removed during reforming of natural gas, and that other useful materials such as sodium carbonate or sodium bicarbonate are capable of being manufactured by using the removed carbon dioxide.

In addition, according to an embodiment of the present disclosure, there is an effect that blue hydrogen is capable of being generated again by using the carbon dioxide reaction product converted into the carbon resource.

In addition, according to an embodiment of the present disclosure, there is an effect that hydrogen may be further generated compared to that of the conventional water electrolysis technology since the carbon dioxide reaction product converted into the carbon resource is utilized as the electrolyte, and there is an effect that oxygen that is a useful resource is capable of being generated together.

### Description of Drawings

FIG. 1 is a conceptual view schematically illustrating a system for generation of blue hydrogen through natural gas reforming, carbon dioxide capture, carbon resource utilization, and reaction product storage according to an embodiment of the present disclosure.
FIG. 2 is a schematic view illustrating a reactor 300 according to an embodiment of the present disclosure.
FIG. 3 is a conceptual view illustrating a hydrogen generator 400 according to an embodiment of the present disclosure.
FIG. 4 is an enlarged view illustrating the B part illustrated in FIG. 3.
FIG. 5 is an enlarged view illustrating the A part illustrated in FIG. 3.
FIG. 6 is a view illustrating a carbon resource storage container according to a first embodiment of the present disclosure.
FIG. 7 is a view illustrating a carbon dioxide capture and reaction product storing system according to a second embodiment of the present disclosure.
FIG. 8 is a view illustrating an underground temperature distribution according to a depth from a general ground surface.
FIG. 9 is a flowchart showing a method for generation of blue hydrogen through natural gas reforming, carbon dioxide capture, carbon resource utilization, and reaction product storage according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

Hereinafter, a system for generation of blue hydrogen through natural gas reforming, carbon dioxide capture, carbon resource utilization, and reaction product storage according to an embodiment of the present disclosure will be described in more detail with reference to the following drawings.

According to an embodiment of the present disclosure, the system for generation of blue hydrogen through natural gas reforming, carbon dioxide capture, carbon resource utilization, and reaction product storage is provided with a natural gas storage container for storing Liquefied Natural Gas (LNG) including shale gas.

In addition, the system is provided with a hydrocarbon reformer configured to produce a gas mixture containing hydrogen and carbon dioxide by a reacting water supplied from outside and the natural gas or shale gas supplied from the natural gas storage container to each other.

In addition, the system is provided with a hydrogen filling station configured to receive and store hydrogen produced from the hydrocarbon reformer.

In addition, the system is provided with a reactor configured to capture carbon dioxide by receiving carbon dioxide produced from the hydrocarbon reformer and reacting carbon dioxide with a basic alkali mixed solution, configured to collect a reaction product containing the captured carbon dioxide, and configured to separate a carbon dioxide reaction product and a waste solution from the reaction product.

In addition, the system is provided with a carbon resource storage container for storing the carbon dioxide reaction product separated from the reactor.

In addition, the system is provided with a hydrogen generator configured to produce hydrogen by using the carbon dioxide reaction product which is separated from the reactor and which is directly transferred to the hydrogen generator or by using the carbon dioxide reaction product transferred to the hydrogen generator via the carbon resource storage container, the hydrogen generator being configured to transfer the produced hydrogen to the hydrogen filling station.

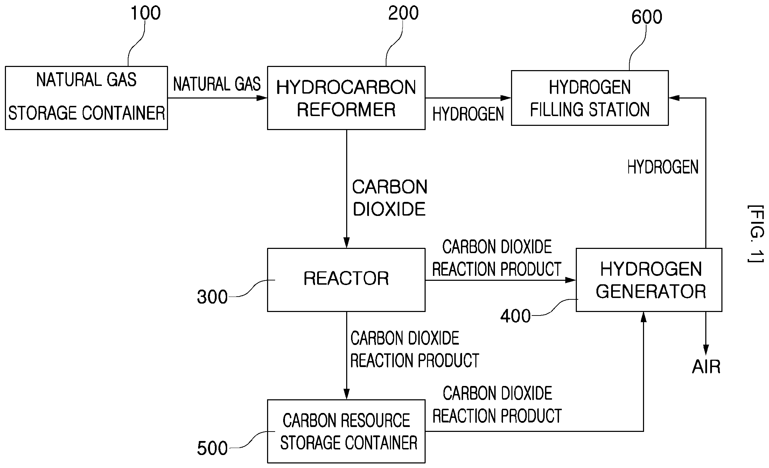

Referring to FIG. 1, the system for generation of blue hydrogen through natural gas reforming, carbon dioxide capture, carbon resource utilization, and reaction product storage according to an embodiment of the present disclosure may include a natural gas storage container 100, a hydrocarbon reformer 200, a reactor 300, a hydrogen generator 400, a carbon resource storage container 500, and a hydrogen filling station 600.

The natural gas storage container 100 is configured to store Liquefied Natural Gas (LNG) including shale gas. Particularly, the shale gas is a large-scale natural gas stored in an underground shale layer onshore or offshore, and is typically transported to a consumer or a storage place through a pipeline connected to a drilling hole. Due to the abundant reserves of the shale gas, such shale gas is attracting attention as a next generation clean energy source compared to other natural gases that have lower economic efficiency. Therefore, the present disclosure proposes a method for actively utilizing such shale gas to produce large-scale blue hydrogen that does not emit carbon dioxide.

The hydrocarbon reformer 200 is configured to produce a gas mixture containing hydrogen and carbon dioxide by reacting hydrocarbon supplied from the natural gas storage container 100, i.e., by reacting a liquid fuel containing the hydrocarbon.

Specifically, the hydrocarbon reformer 200 may produce the gas mixture containing hydrogen and carbon dioxide by reacting hydrocarbon with water vapor as shown in the following Formula 1.

<Formula 1> CH₄ + 2H₂O → CO₂ + 4H₂

In the chemical reaction described above, the ratio of hydrogen and carbon dioxide in terms of an amount of substance is 4:1, but about 5 tons to 10 tons of carbon dioxide is emitted when 1 ton of hydrogen is produced. That is, since the amount of carbon dioxide is larger than the amount of hydrogen produced according to the chemical reaction, a method for reducing carbon dioxide is required.

To this end, the hydrocarbon reformer 200 may include an extraction mechanism for extracting or separating hydrogen and carbon dioxide from the gas mixture, and may include a transfer mechanism for supplying hydrogen extracted from the extraction mechanism to the hydrogen filling station 600 and for supplying carbon dioxide separated from hydrogen from the gas mixture to the reactor 300.

The reactor 300 is connected to the hydrocarbon reformer 200, and is configured to capture carbon dioxide by receiving carbon dioxide generated from the hydrocarbon reformer 200 and by reacting carbon dioxide with a basic alkali mixed solution, to collect a reaction product containing the captured carbon dioxide, and to separate a carbon dioxide reaction product and a waste solution from the reaction product, thereby being capable of capturing carbon dioxide and converting carbon dioxide into a carbon resource.

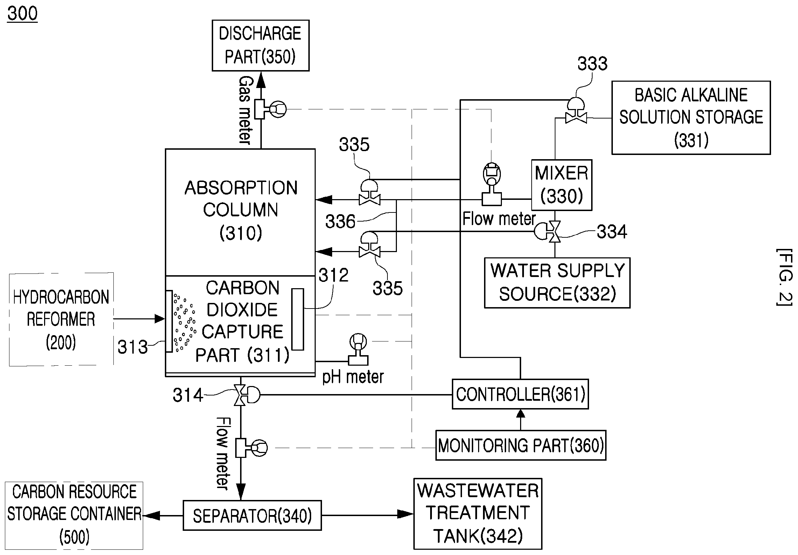

To this end, as illustrated in FIG. 2, the reactor 300 according to an embodiment of the present disclosure is a system for capturing carbon dioxide supplied from the hydrocarbon reformer 200 by using a basic alkaline solution, and may include an absorption column 310, a carbon dioxide capture part 311, a mixer 330, a separator 340, and a discharge part 350.

The absorption column 310 may refer to a facility, a building, equipment, and so on configured to capture carbon dioxide. In addition, the carbon dioxide capture part 311 positioned on a lower end of the absorption column 310 is a portion of the absorption column 310, and may refer to a portion where carbon dioxide is captured by bubbling a flue gas.

The absorption column 310 includes the carbon dioxide capture part 311 at the lower end of the absorption column 110, and is configured to capture carbon dioxide by reacting a basic alkali mixed solution with carbon dioxide (carbon dioxide micro bubbles).

A nozzle is mounted on an upper portion of the absorption column 310, the basic alkali mixed solution is sprayed inside the absorption column 310 through the nozzle from the mixer 330, and the basic alkali mixed solution is collected in the carbon dioxide capture part 311 positioned at the lower end of the absorption column 310.

At the same time as the basic alkali mixed solution is sprayed, carbon dioxide supplied from the hydrocarbon reformer 200 passes through a bubbler 313 in the carbon dioxide capture part 311 at the lower portion of the absorption column 310 so that carbon dioxide in which micro bubbles are formed is supplied, and the basic alkali mixed solution and carbon dioxide micro bubbles react with each other within the carbon dioxide capture part 311, so that carbon dioxide is captured. When carbon dioxide reacts with the basic alkali mixed solution, the micro bubbles are formed while carbon dioxide passes through the bubbler 313 having fine holes formed on an outlet of the hydrocarbon reformer 200.

As the carbon dioxide supplied from the hydrocarbon reformer 200 passes through the bubbler 313, the bubbler 313 may form the micro bubbles in the carbon dioxide. Furthermore, the smaller the size of the micro bubbles, the larger the reaction area of the carbon dioxide and the alkaline solution, so that the carbon dioxide capture ability may be increased. For example, the micro bubbles may refer to bubbles which have a size about equal to or less than 50 *µ*m and which exist in an aqueous solution.

In addition, the absorption column 310 may include a level indicator 312 inside the absorption column 310, so that a level of a solution in the absorption column 410 is capable of being detected.

The nozzle may include a plurality of nozzles, and may be formed of at least one stage. The nozzle is connected to the mixer 330, and may supply a basic alkali mixed solution from the mixer 330.

The absorption columns 310 may be configured in series, in parallel, or in a series and parallel complex arrangement.

For example, the absorption columns 310 may be arranged in series when the flow velocity of the flue gas is high. When carbon dioxide unreacted due to a high flow velocity is discharged from the absorption columns, the absorption columns may be mounted in series so as to capture the unreacted carbon dioxide.

In addition, for example, the absorption column 310 may be arranged in parallel when the flow rate of the flue gas is large. When the flow rate of the flue gas exceeds the amount that the absorption column can capture, the amount of carbon dioxide that can be captured may be increased by arranging the absorption column in parallel.

The mixer 330 mixes a basic alkaline solution supplied from a basic alkaline solution storage 331 with water supplied from a water supply source 332, and supplies the mixture to the nozzle of the absorption column 310.

A basic alkali mixed solution in which the basic alkaline solution and water are mixed with each other may be supplied by using a separately connected bypass line 336 when a supply amount or a required amount of the basic alkali mixed solution is increased.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkali mixed solution mixing ratio of the basic alkaline solution and water is increased, but the mixing ratio of water may be adjusted in consideration of the cost aspect.

The basic alkali mixed solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 332 may include all water that may be easily acquired at a system installation site, and water may be seawater as an example.

An average pH of the basic alkali mixed solution may be at least pH 12. For example, the pH may be pH 12 to pH 13.5, pH 13, pH 12, pH 12.1, pH 12.2, or pH 12.3. The pH of the basic alkali mixed solution may be measured by a pH meter in the absorption column 310, and carbon dioxide cannot be captured anymore when the pH of the basic alkali mixed solution in the absorption column 310 is less than pH 10.5. Therefore, in order to adjust the pH of the basic alkali mixed solution, the basic alkaline solution and water may be supplied to the mixer 330 by adjusting the amount of the basic alkaline solution and the amount of water from zero to 100% by each valve 333 and 334.

When the level of the basic alkali mixed solution in the absorption column 310 is lower than 90% (measured by the level indicator), the input of the basic alkali mixed solution may be adjusted through a valve 335 at the mixer 330 so that the basic alkali mixed solution is input. Furthermore, when the level of the solution reaches 100%, the input of the basic alkali mixed solution may be stopped. At the same time, the basic alkaline solution and water may be mixed until the pH of the basic alkali mixed solution becomes pH 12 to pH 13.5.

Since the amount of basic alkali mixed solution supplied to the absorption column 310 and the amount of a solution discharged from the separator 340 are the same, the carbon dioxide capture system is capable of being continuously maintained. Therefore, the valve 335 (including a bypass valve if necessary) may be adjusted such that the same amount of the basic alkali mixed solution as a value of a flow meter mounted in a line from the absorption column 310 to the separator 340 is supplied to the absorption column 310 so that the net flow is adjusted to zero.

A reaction product containing carbon dioxide captured by reacting the basic alkali mixed solution and carbon dioxide with each other is collected in the carbon dioxide capture part 311 of the absorption column 310, a carbon dioxide reaction product and a waste solution in the reaction product are moved to the separator 340 through a valve 314, and the carbon dioxide reaction product and the waste solution in the reaction product are separated from each other. For example, the separator 340 may be configured to perform the separation by using a centrifugal separation method.

The separated carbon dioxide reaction product contains sodium carbonate (Na₂CO₃) or sodium bicarbonate (NaHCO₃), which are useful carbon resources, and the separated carbon dioxide reaction product is moved to the carbon resource storage container 500. Furthermore, the moved carbon dioxide reaction product may be supplied to the hydrogen generator 400 that will be described later.

In addition, the carbon dioxide reaction product is a compound with high added value and great commercial potential, as the carbon dioxide reaction product is a substance that can be utilized in various industries such as soap, detergent, leather, and food additives.

The reactor 300 is a system used on land, so that a place for storing a carbon dioxide reaction product is capable of being easily secured. Therefore, the carbon dioxide reaction product may be separated and stored in the carbon resource storage container 500 so as to utilize the carbon dioxide reaction product into other useful materials.

As described in Formula 2 below, the carbon dioxide reaction product may be formed by reacting the basic alkali mixed solution with carbon dioxide.

<Formula 2> 2NaOH + CO₂ → Na₂CO₃ + H₂O Na₂CO₃ + H₂O + CO₂ → 2NaHCO₃

In the reaction product, a waste solution other than a carbon dioxide reaction product is moved to a wastewater treatment tank 342 and then is discarded. For example, the waste solution may contain illite minerals, water, and so on that are contained in the basic alkali mixed solution that has finished a catalyst function.

A residual flue gas in which carbon dioxide is removed after carbon dioxide is captured in the carbon dioxide capture part 311 is discharged through the discharge part 350. For example, the residual flue gas discharged through the discharge part 350 may include some small amounts of uncaptured carbon dioxide.

At this time, since the concentration of carbon dioxide cannot exceed the regulatory standard value when the residual flue gas is discharged, the residual flue gas that does not exceed a standard (the standard set by a manager after the concentration of carbon dioxide in the atmosphere is measured) may be discharged on the basis of the concentration of carbon dioxide in the atmosphere to which the residual flue gas is discharged.

The reactor 300 may further include: a monitoring part 360 configured to monitor a level and a pH of a basic alkali mixed solution in the absorption column; and a controller 361 configured to adjust a supply amount of the basic alkali mixed solution by the monitoring part 360.

Values of a gas meter, a pH meter, and a flow meter measured in all processes in the reactor 300 are managed in the monitoring part 360, and the controller 361 performs adjustment on the basis of the values represented in the monitoring part 360. The valves 314, 333, 334, and 335 may be adjusted in terms of percentage with respect to values input from the controller 361.

As described above, by capturing carbon dioxide generated from the hydrocarbon reformer 200, the reactor 300 according to an embodiment of the present disclosure may reduce carbon dioxide that may have a profound effect on global warming, and may convert the captured carbon dioxide into sodium carbonate or sodium bicarbonate so that the captured carbon dioxide is utilized as other useful materials.

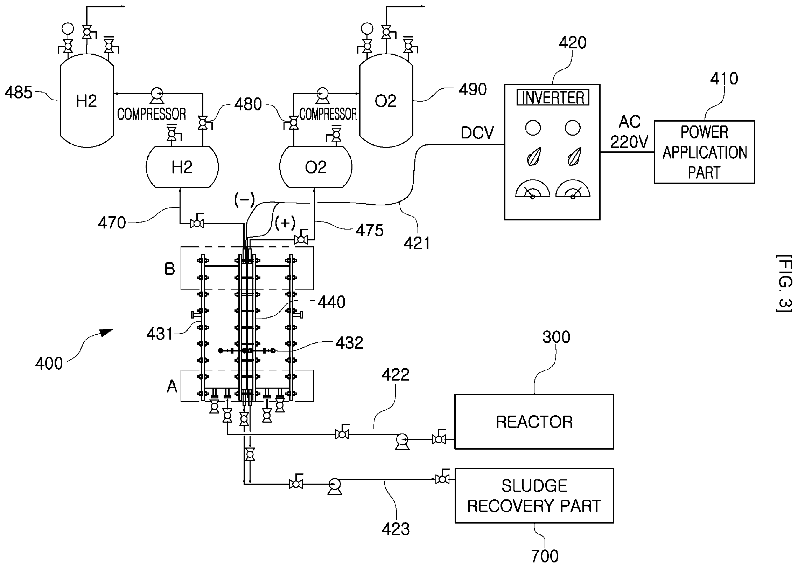

Meanwhile, referring to FIG. 1 and FIG. 3, the hydrogen generator 400 may receive a separated carbon dioxide reaction product from the reactor 300 and may generate hydrogen by using the carbon dioxide reaction product, and may supply the generated hydrogen to the hydrogen filling station 600. Through this, the hydrocarbon reforming efficiency compared to that of a conventional technology may be increased, and also carbon dioxide may be utilized to the maximum extent, thereby contributing to the reduction of greenhouse gases.

In order to describe the hydrogen generator 400 in detail, hereinafter, the hydrogen generator 400 will be described with reference to FIG. 3 to FIG. 5.

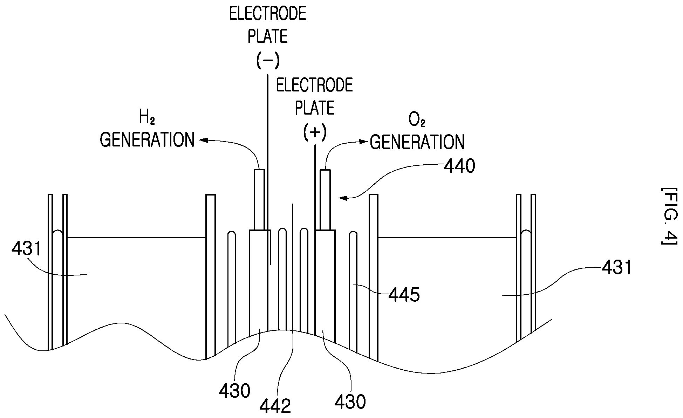

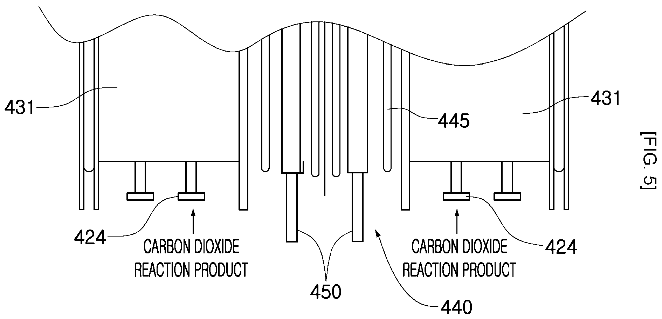

FIG. 3 is a conceptual view illustrating the hydrogen generator 400 according to an embodiment of the present disclosure, FIG. 4 is an enlarged view illustrating the B part illustrated in FIG. 3, and FIG. 5 is an enlarged view illustrating the A part illustrated in FIG. 3.

As illustrated in FIG. 3 to FIG. 5, the hydrogen generator 400 includes: a carbon dioxide reaction product supply tank 431 for supplying sodium carbonate (Na₂CO₃) or sodium bicarbonate (NaHCO₃), each being a carbon dioxide reaction product separated from the reactor (see reference numeral 300 in FIG. 1); a water electrolysis cell 440 configured to generate hydrogen gas and oxygen gas through electrolysis by using sodium carbonate (Na₂CO₃) or sodium bicarbonate (NaHCO₃) supplied from the carbon dioxide reaction product supply tank 431 as an electrolyte for the electrolysis; and a power application part 410 and an inverter 420 for applying a current to the water electrolysis cell 440.

The carbon dioxide reaction product supply tank 431 receives sodium carbonate (Na₂CO₃) or sodium bicarbonate (NaHCO₃) through a carbon dioxide reaction product inlet flow path 422 and stores sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor 300. Furthermore, the carbon dioxide reaction product supply tank 431 may be provided with a carbon dioxide reaction product inlet port 424 connected to an electrolyte supply flow path 432 configured to supply the carbon dioxide reaction product stored in the carbon dioxide reaction product supply tank 431 to the water electrolysis cell 440. In the carbon dioxide reaction product supply tank 431 may be provided with a pump for pumping sodium carbonate (Na₂CO₃) or sodium bicarbonate (NaHCO₃) being an electrolyte for the electrolysis performed by the hydrogen generator 400.

As illustrated in FIG. 4 and FIG. 5, the water electrolysis cell 440 may include: a negative electrode (-) plate and a positive electrode (+) plate; a diaphragm 442 that is an electrolyte membrane disposed between the negative electrode plate and the positive electrode plate; a pair of electrolyzers 430 which accommodates the carbon dioxide reaction product supplied from the carbon dioxide reaction product supply tank 431 and which is connected to a hydrogen storage tank 485 and an oxygen storage tank 490; a gas discharge part configured to discharge hydrogen gas and oxygen gas that are generated by electrolyzing the carbon dioxide reaction product in the electrolyzers 430; and a drain 450 for discharging an ion material that has not been reacted by electrolysis.

Preferably, in order to prevent the carbon dioxide reaction product stored in the carbon dioxide reaction product supply tank 431 from being in contact with the electrode plates, a packing 445 formed as a non-conductor and a control part (not illustrated) capable of selectively controlling whether the carbon dioxide reaction product inlet flow path 422 is opened or closed by using power of the power application part 410 may further be provided.

As in the following Formula 3, in a state in which the electrode plates at both sides are supplied with sodium carbonate (Na₂CO₃) or sodium bicarbonate (NaHCO₃) being the electrolyte in the present disclosure, the water electrolysis cell 440 generates hydrogen gas (H₂) and oxygen gas (O₂) as power is applied to the water electrolysis cell 440 by the power application part 410 and the inverter 420 through a DC busbar.

<Formula 3> Reduction electrode (negative electrode) reaction: Na₂CO₃ + CO₂ + 2H₂O + 2e- → 2NaOH + 2CO₂ + 2OH- + H₂ 2NaHCO₃ + 2e- → 2NaOH + 2CO₂ + 2OH- + H₂ Oxidation electrode (positive electrode) reaction: Na₂CO₃ + CO₂ + H₂O - 2e- → 2NaOH + 2CO₂ + 2H+ + O₂ 2NaHCO₃ - 2e- → 2NaOH + 2CO₂ + 2H+ + O₂

That is, at this time, sodium carbonate (Na₂CO₃) or sodium bicarbonate (NaHCO₃), which are an electrolyte supplied to the water electrolysis cell 440, dissociates on a surface of the negative electrode plate and discharges hydrogen gas, and oxygen gas is discharged on the positive electrode plate as oxygen ions move through the diaphragm that is the electrolyte membrane. Here, the ion material that has not been reacted in Formula 3 may be transferred to a sludge recovery part 700 of the hydrogen generator 400 through the drain 450.

Through the process described above, hydrogen gas discharged from the water electrolysis cell 440 is discharged through a hydrogen discharge flow path 470 and passes through a filter and a compressor, so that high purity hydrogen gas is stored in the hydrogen storage tank 485. Furthermore, the stored hydrogen gas may be supplied to the hydrogen filling station (see reference numeral 600 in FIG. 1) again for use in hydrogen electric vehicle charging and other applications.

Similarly, oxygen gas discharged from the water electrolysis cell 440 is discharged through an oxygen discharge flow path 475 and passes through a filter and a compressor, so that high purity oxygen gas may be stored in the oxygen storage tank 490.

Meanwhile, in a cathode of a conventional water electrolysis technology that uses water as an electrolyte, OH- radical is generated as a reaction product during a reduction process, and water (H₂O) is generated since OH- radical easily recombines with oxygen (O₂) generated through oxidation at an anode and hydrogen (H₂) generated through reduction at the cathode, so that there is a problem that the hydrogen (H₂) generation efficiency is reduced as a result.

However, in the present disclosure, sodium carbonate(Na₂CO₃) or sodium bicarbonate (NaHCO₃), which are a carbon dioxide reaction product, is used as an electrolyte for electrolysis. Therefore, the recombination of the dissociated OH- radicals with hydrogen (H₂) and oxygen (O₂) in the conventional water electrolysis technology is prevented by sodium carbonate(Na₂CO₃) or sodium bicarbonate (NaHCO₃) being a carbon dioxide reaction product, so that the hydrogen (H₂) generation efficiency may be increased as a result.

In addition, in the present disclosure, since Na⁺ ions are dissociated through the water electrolysis reaction, the hydrogen (H₂) gas generation amount may be increased due to an increase in electrical conductivity, so that there is an effect that a problem of the conventional technology is capable of being solved.

Hereinafter, the carbon resource storage container according to an embodiment of the present disclosure will be described in more detail with reference to the following drawings.

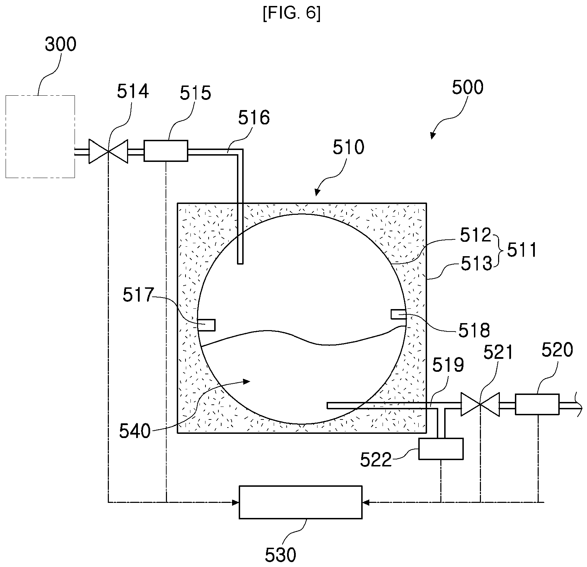

Referring to FIG. 6, the carbon resource storage container 500 according to a first embodiment of the present disclosure is a system capable of storing a carbon dioxide capture and reaction product in any environment regardless of environmental conditions on the ground, in the ground, and in the sea.

Preferably, the carbon resource storage container 500 is a carbon dioxide capture and reaction product storage system suitable for an environment on the ground, and may include: the reactor 300 configured to capture carbon dioxide by receiving carbon dioxide generated from the hydrocarbon reformer 200 and reacting the carbon dioxide with a basic alkali mixed solution, the reactor 300 being configured to convert the captured carbon dioxide into a carbon resource; a storage tank 510 configured to receive and store a carbon dioxide reaction product converted into the carbon resource from the reactor 300; an inlet unit 514, 515, and 516 and a discharge unit 519, 520, 521, and 522 that are connected to the storage tank 510; and a control unit 530 configured to control the inlet unit or the discharge unit.

The reactor 300 may capture carbon dioxide by receiving carbon dioxide generated from the hydrocarbon reformer 200 and reacting the carbon dioxide with a basic alkali mixed solution, may collect a reaction product containing the captured carbon dioxide, and may separate a carbon dioxide reaction product and a waste solution from the reaction product.

The storage tank 510 has a tank body 511 formed in a double wall structure of an inner wall 512 and an outer wall 513, and an insulation material may be formed between the inner wall 512 and the outer wall 513. Through this, since a heat transfer rate transmitted to the inside or the outside of the storage tank 510 is minimized, a heat conservation function and an insulation function are increased accordingly, and the carbon dioxide reaction product in a liquid state or a gel state delivered from the reactor 300 may be stored for a long time without being sensitive to the temperature change. The carbon dioxide reaction product is bicarbonate in a liquid state or a gel state, and may be maintained for a long time without a change in state at the room temperature in which an insulation state is maintained.

The storage tank 510 is a tank having a sealing and insulating wall such that bicarbonate in the liquid state or the gel state is capable of being stored, and may have a spherical shape or a square shape. Since a conventional storage tank stores carbon dioxide in a liquid state, the pressure in the tank is very high (at least a pressure of 5 atmospheric pressure or more), so that the conventional storage tank generally has a sphere shape in order to ensure the rigidity of the storage tank against the pressure. However, since the storage tank 510 according to the first embodiment of the present disclosure stores bicarbonate in the liquid state or the gel state at the room temperature, the storage tank 510 may have various shapes such as the spherical shape or the square shape.

The inner wall 512 of the storage tank 510 may include a level sensor 517 configured to measure a level of the carbon dioxide reaction product loaded in the storage tank 510 and to input a sensing value into the control unit 530, and may include a pressure sensor 518 configured to measure a pressure inside the storage tank 510 and to input a sensing value into the control unit 530.

The inlet unit is connected to the storage tank 510 and configured to load the carbon dioxide reaction product into the storage tank 510, and may include the inlet valve 514, the inlet flow rate sensor 515, and the inlet line 516.

The inlet valve 514 serves to adjust the flow rate of bicarbonate in the liquid state or the gel state loaded inside the storage tank 510. In addition, the inlet valve 514 may adjust the flow rate of bicarbonate loaded inside the storage tank 510 by the control unit 530 determining whether to open or close the inlet valve 514 on the basis of the sensing value for the level of the carbon dioxide reaction product measured by the level sensor 517.

The inlet flow rate sensor 515 may generate an inlet flow rate value by measuring the flow rate of bicarbonate in the liquid state or the gel state loaded inside the storage tank 510 through the inlet valve 514, and may transmit the generated inlet flow rate value to the control unit 530.

The inlet line 516 may include a pipe and so on capable of transporting bicarbonate in the liquid state or the gel state, and may be connected to the inside of the storage tank 510. A first distal end of the inlet line 516 may extend inside the storage tank 510.

Meanwhile, the discharge unit is connected to the storage tank 510 and configured to unload bicarbonate in the liquid state or the gel state pre-stored in the storage tank 510, and may include the discharge line 519, the discharge pump 520, the discharge valve 521, and the vacuum pump 522.

The discharge line 519 may include a pipe and so on capable of discharging bicarbonate in the liquid state or the gel state pre-stored inside the storage tank 510 to the outside, and may be connected to the inside of the storage tank 510. A first distal end of the discharge line 519 may extend inside the storage tank 510.

The discharge pump 520 is provided on the discharge line 519, and provides a power to forcibly discharge the bicarbonate contained in the storage tank 510 to the outside.

The discharge valve 521 may open and close a flow path toward the discharge pump 520 for the carbon dioxide reaction product stored in the storage tank 510 according to a control operation of the control unit 530. That is, the discharge valve 521 may be opened and closed so that the carbon dioxide reaction product is capable of being discharged to the outside.

The vacuum pump 522 is connected to the discharge line 519 between the storage tank 510 and the discharge valve 521, and may discharge air in the storage tank 510 to the outside according to the control operation of the control unit 530, thereby being capable of maintaining a vacuum state inside the storage tank 510.

The control unit 530 may be connected to the level sensor 517, the pressure sensor 518, the inlet unit 514, 515, and 516 and the discharge unit 519, 520, 521, and 522, and may control the operation of each component. In addition, the control unit 530 may control the inlet unit 514, 515, and 516 when the carbon dioxide capture and reaction product that is bicarbonate in the liquid state or the gel state is loaded into the storage tank 510, or may control the discharge unit 519, 520, 521, and 522 when the carbon dioxide capture and reaction product is discharged from the storage tank 510 to the outside.

According to the first embodiment of the present disclosure, when the sensing value of the level sensor 517 mounted on the inner wall 512 of the storage tank 510 falls below a predetermined value, the control unit 530 determines that a level of the carbon dioxide reaction product stored in the storage tank 510 is less than a predetermined target level value, and may control such that the inlet valve 514 is opened according to the determination result so that the carbon dioxide reaction product is continuously loaded inside the storage tank 510 through the inlet line 516.

Meanwhile, when the sensing value of the level sensor 517 reaches the predetermined target level value or when a flow rate value measured by the inlet flow rate sensor 515 reaches a predetermined target flow rate, the control unit 530 determines that the target amount of carbon dioxide reaction product stored in the storage tank 510 has been filled, and the control unit 30 may further control such that the inlet valve 514 is closed according to the determination result and a flow path of introducing the carbon dioxide reaction product into the storage tank 510 is blocked so that bicarbonate that is the carbon dioxide reaction product is stopped from being loaded into the storage tank 510.

In addition, when the control unit 530 receives a discharge signal of the carbon dioxide reaction product stored inside the storage tank 510 from a manager terminal (not illustrated) configured to manage the carbon dioxide capture and reaction product storing system, the control unit 530 may control the discharge valve 521 and the discharge pump 520 such that the discharge valve 521 is opened and the discharge pump 520 is operated, thereby being capable of discharging the carbon dioxide reaction product stored inside the storage tank 510 to the outside.

In addition, when the flow path of the carbon dioxide reaction product loaded inside the storage tank 510 is opened and closed according to the flow path opening and closing operation of the inlet valve 514, the vacuum state inside the storage tank 510 is released, so that the control unit 530 may measure a pressure inside the storage tank 510 and may drive the vacuum pump 522 so that the sensing value of the pressure sensor 518 that inputs the sensing value to the control unit 530 reaches the target vacuum pressure.

Likewise, when the flow path of the carbon dioxide reaction product that is discharged to the outside of the storage tank 510 is opened and closed according to the flow path opening and closing operation of the discharge valve 521, the vacuum state inside the storage tank 510 is released, so that the control unit 530 may measure a pressure inside the storage tank 510 and may drive the vacuum pump 522 so that the sensing value of the pressure sensor 518 that inputs the sensing value to the control unit 530 reaches the target vacuum pressure.

That is, the inside of the storage tank 510 may be maintained in the vacuum state by the vacuum pump 522. Therefore, even when the inlet valve 514 and the discharge valve 521 are opened and closed, the vacuum level inside the storage tank 510 is maintained, so that bicarbonate that is the carbon dioxide reaction product stored inside the storage tank 510 may be stored for a long time in the vacuum state without the change in state.

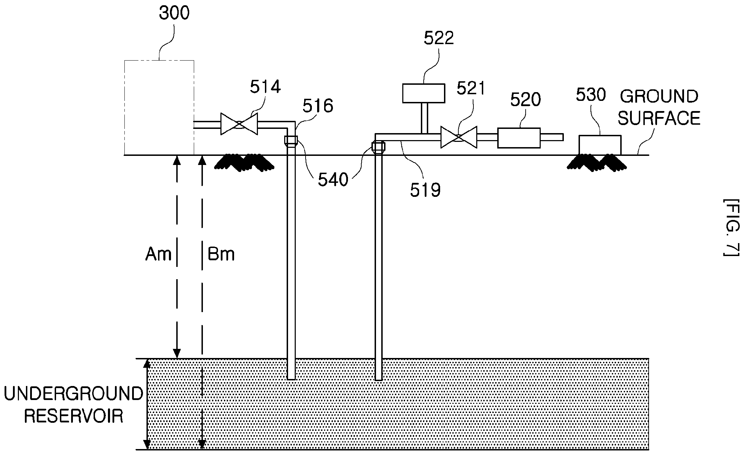

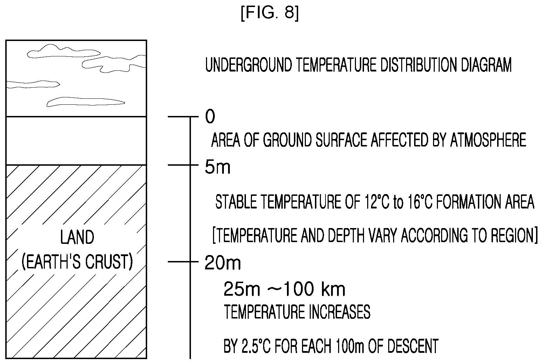

FIG. 7 is a view illustrating the carbon resource storage container according to a second embodiment of the present disclosure, and FIG. 8 is a view illustrating an underground temperature distribution according to a depth from a general ground surface.

First, referring to FIG. 7, the carbon resource storage container 500 according to the second embodiment of the present disclosure is a carbon dioxide capture and reaction product storing system suitable for an underground environment, and may include: the reactor 300 configured to capture carbon dioxide by receiving carbon dioxide generated from the hydrocarbon reformer 200 and reacting the carbon dioxide with a basic alkali mixed solution, the reactor 300 being configured to convert the captured carbon dioxide into a carbon resource; an underground reservoir D configured to receive and store a carbon dioxide reaction product converted into the carbon resource from the reactor 300; the inlet unit 514 and 516 and the discharge unit 519, 520, 521, and 522 that have first ends connected to the underground reservoir D; the control unit 530 configured to control the inlet unit or the discharge unit; and a filter 540 configured to filter out impurities other than the carbon dioxide reaction product during loading/unloading of the carbon dioxide reaction product.

The reactor 300 may capture carbon dioxide by receiving carbon dioxide generated from the hydrocarbon reformer 200 and reacting the carbon dioxide with a basic alkali mixed solution, may collect a reaction product containing the captured carbon dioxide, and may separate a carbon dioxide reaction product and a waste solution from the reaction product.

The underground reservoir D is a place in which a carbon dioxide reaction product separated by the reactor 300 is accommodated and which is capable of being excavated in a natural terrain. Here, the carbon dioxide reaction product includes bicarbonate in the liquid state or the gel state.

As illustrated in FIG. 7, for example, the underground reservoir D may be formed at a depth of 5 m to 20 m underground from the land, so that the underground reservoir D may not be affected by external temperature. In addition, the underground reservoir D formed at the depth of 5 m to 20 m underground may have a stable temperature of 12 degrees Celsius to 16 degrees Celsius, and may be formed in a natural environment without external shielding.

In addition, the underground reservoir D may be formed at a depth of Am but may be formed at a depth lower than Bm from the ground, and may be formed at different depths in which a stable room temperature of 12 degrees Celsius to 16 degrees Celsius is formed according to a region. This is to prevent the carbon dioxide reaction product that is bicarbonate from changing the state in a place where the temperature exceeds 50 degrees Celsius, and to store the carbon dioxide reaction product in the form of bicarbonate in the liquid state or the gel state over a wide area for a long time.

The inlet unit is connected to the underground reservoir D and serves to load the carbon dioxide reaction product separated from the reactor 300 into the underground reservoir D, and may include: the inlet valve 514 configured to open and close a flow path for the carbon dioxide reaction product loaded inside the underground reservoir D and to adjust the flow rate of the loaded carbon dioxide reaction product; and the inlet line 516 connected to the underground reservoir D such that the carbon dioxide reaction product is capable of being loaded into the underground reservoir D. Through the configuration of such an inlet unit, bicarbonate in the liquid state or the gel state that is the carbon dioxide reaction product separated from the reactor 300 may be stored in the underground reservoir D.

The discharge unit serves to unload the carbon dioxide reaction product in the underground reservoir D, and may include: the discharge line 519 connected to the underground reservoir D and configured to discharge the carbon dioxide reaction product to the outside of the underground reservoir D; the discharge pump 520 provided on the discharge line 519 and configured to forcibly discharge the carbon dioxide reaction product stored in the underground reservoir D to the outside; the discharge valve 521 configured to open and close a flow path toward the discharge pump 520 for the carbon dioxide reaction product stored in the underground reservoir D; and the vacuum pump 522 connected to the discharge line 519 between the underground reservoir D and the discharge valve 521 and configured to form a vacuum state by discharging air in the underground reservoir D to the outside. Through the configuration of such a discharge unit, the carbon dioxide reaction product may be stably stored in the underground reservoir, and the pre-stored carbon dioxide reaction product may be acquired and used later when the carbon dioxide reaction product is required.

When the carbon dioxide reaction product is loaded into the underground reservoir D or when the carbon dioxide reaction product is discharged from the underground reservoir D to the outside, the control unit 530 controls the inlet unit 514 and 516 and the discharge unit 519, 520, 521, and 522 so that the carbon dioxide reaction product having an appropriate flow rate is capable of being stored in the underground reservoir D or the carbon dioxide reaction product pre-stored in the underground reservoir D is capable of being discharged to the outside.

The filter 540 may be disposed in a path of the inlet line 516 or a path of the discharge line 519, and may have pores having a diameter of 10 *µ*m to 20 *µ*m formed in a size that allows penetration of the carbon dioxide reaction product, so that the filter 540 is capable of filtering out impurities other than the carbon dioxide reaction product during loading/unloading of the carbon dioxide reaction product.

Accordingly, the filter 540 performs a function of filtering out impurities other than the carbon dioxide reaction product when the carbon dioxide reaction product introduced from the reactor 300 is loaded to the underground reservoir D or the carbon dioxide reaction product is discharged from the underground reservoir D to the outside. Therefore, impurities other than the carbon dioxide reaction product are not mixed and may not be stored in the underground reservoir D, or only the carbon dioxide reaction product without impurities may be acquired when the carbon dioxide reaction product pre-stored in the underground reservoir D is discharged to the outside.

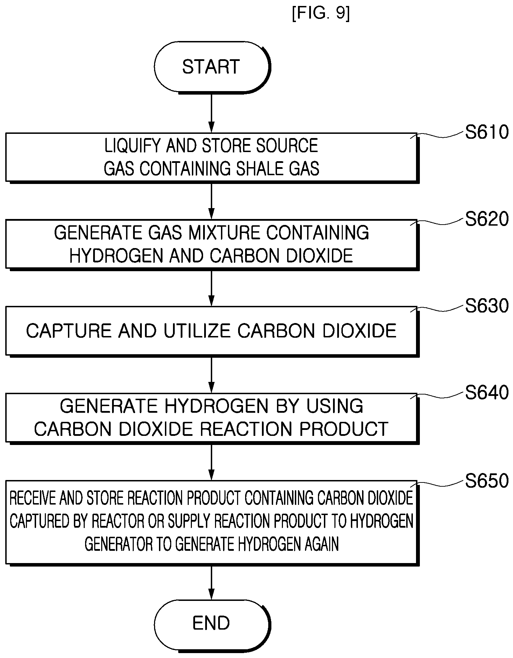

FIG. 9 is a flowchart showing a method for generation of blue hydrogen through natural gas reforming, carbon dioxide capture, carbon resource utilization, and reaction product storage according to an embodiment of the present disclosure.

Referring to FIG. 9, the method for generation of blue hydrogen through natural gas reforming, carbon dioxide capture, carbon resource utilization, and reaction product storage according to an embodiment of the present disclosure may include: a process A (S610) in which the natural gas storage container liquefies and stores a source gas containing shale gas; a process B (S620) in which a gas mixture containing hydrogen and carbon dioxide is produced; a process C (S630) in which carbon dioxide is captured and utilized; a process D (S640) in which hydrogen is produced by using a carbon dioxide reaction product; and a process E (S650) in which a reaction product containing carbon dioxide captured by the reactor is received and stored or the reaction product is supplied to the hydrogen generator so as to produce hydrogen again.

Specifically, in the process A (S610), the natural gas storage container liquefies and stores a source gas containing shale gas. The source gas (natural gas) required for producing blue hydrogen gas of the present disclosure may typically use shale gas.

Specifically, in the process B (S620), the hydrocarbon reformer 200 may react water introduced from outside with a source gas stored in the natural gas storage container 100 in the process A (S610) so as to produce a gas mixture containing hydrogen and carbon dioxide, may extract hydrogen gas from the gas mixture and supply the hydrogen gas to the hydrogen filling station 600, and carbon dioxide gas separated from the hydrogen gas in the gas mixture may be supplied to the reactor 300.

In the process C (S630), the reactor 300 may receive the carbon dioxide gas generated in the process B (S620) and react the carbon dioxide gas with a basic alkali mixed solution so that the carbon dioxide gas is captured, may collect a reaction product containing captured carbon dioxide, and may separate a carbon dioxide reaction product and a waste solution from each other in the reaction product. Here, the carbon dioxide reaction product may include sodium carbonate (Na₂CO₃) or sodium bicarbonate (NaHCO₃).

The basic alkali mixed solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂). Furthermore, the basic alkali mixed solution may be used for manufacturing a carbon resource by capturing and converting carbon dioxide, the carbon resource being a useful material.

In addition, the process C (S630) may include a process in which the basic alkali mixed solution is input by being adjusted through the valve (see reference numeral 335 in FIG. 2) in the mixer (see reference numeral 330 in FIG. 2) included in the reactor 300 when the level of the basic alkali mixed solution in the reactor 300 is lowered to less than 90% and in which inputting of the basic alkali mixed solution is stopped and, at the same time, the basic alkaline solution and water are mixed until the pH of the basic alkali mixed solution becomes pH 12 to pH 13.5 when the level of the basic alkali mixed solution becomes 100%.

Since the amount of basic alkali mixed solution supplied to the absorption column (see reference numeral 310 in FIG. 2) of the reactor 300 and the amount of a solution discharged from the separator (see reference numeral 340 in FIG. 2) are the same, the carbon dioxide capture system is capable of being continuously maintained. Therefore, the valve (see reference numeral 335 in FIG. 2) (including a bypass valve if necessary) may be adjusted such that the same amount of the basic alkali mixed solution as a value of a flow meter mounted in a line from the absorption column (see reference numeral 310 in FIG. 2) to the separator (see reference numeral 340 in FIG. 2) is supplied to the absorption column (see reference numeral 310 in FIG. 2) so that the net flow is adjusted to zero.

In the process D (S640), the hydrogen generator 400 may generate hydrogen gas and oxygen gas through electrolysis by using sodium carbonate (Na₂CO₃) or sodium bicarbonate (NaHCO₃) as an electrolyte for the electrolysis, sodium carbonate (Na₂CO₃) or sodium bicarbonate (NaHCO₃) being the carbon dioxide reaction product separated in the process C (S630). Here, the generated hydrogen gas may be supplied to the hydrogen filling station 600 again and may be stored. The configuration and function of the hydrogen generator 400 are described above with reference to FIG. 3 to FIG. 5, so that the description according to the embodiment will not be specifically described.

According to an embodiment of the present disclosure, carbon dioxide generated after reforming of natural gas typically containing shale gas is captured and converted into a carbon resource, so that carbon dioxide may be removed during reforming of natural gas and, at the same time, sodium carbonate and sodium bicarbonate, which are other useful materials, may be manufactured.

In addition, according to an embodiment of the present disclosure, hydrogen is generated by using the carbon dioxide reaction product converted into the carbon resource, and the generated hydrogen is supplied to the hydrogen filling station again and is stored, so that there is an effect of realizing the large-scale production of blue hydrogen.

In addition, according to an embodiment of the present disclosure, there is an effect that blue hydrogen may be further generated compared to that of the conventional water electrolysis technology since the carbon dioxide reaction product converted into the carbon resource is utilized as the electrolyte.

In addition, in the present disclosure, hydrogen generated through the reformer and hydrogen produced through the carbon dioxide reaction product may be expanded and supplied to all demand sources capable of using hydrogen fuel by replacing existing fossil fuels, such as hydrogen fuel propulsion ships and hydrogen fuel propulsion aircraft, as well as hydrogen fuel charging stations for vehicles that are currently in demand.

So far, the system for generation of blue hydrogen through natural gas reforming, carbon dioxide capture, carbon resource utilization, and reaction product storage, and the method therefor according to the present disclosure have been described with reference to exemplary embodiments.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

In the present disclosure, a system for generation of blue hydrogen through natural gas reforming, carbon dioxide capture, carbon resource utilization, and reaction product storage may be provided, the system being capable of efficiently reducing carbon dioxide generated during reforming of natural gas containing shale gas and also being capable of converting carbon dioxide into other useful materials.

In addition, according to the present disclosure, the system for generation of blue hydrogen through natural gas reforming, carbon dioxide capture, carbon resource utilization, and reaction product storage may be easily applied to a conventional hydrogen generation plant, so that an eco-friendly system for reducing carbon dioxide generated by hydrocarbon reforming may be provided.

In addition, according to the present disclosure, the system for generation of blue hydrogen through natural gas reforming, carbon dioxide capture, carbon resource utilization, and reaction product storage is configured such that hydrogen (H₂) is generated by using the carbon dioxide reaction product converted into the carbon resource and the generated hydrogen (H₂) is transferred to and stored in the hydrogen filling station again, so that the generation efficiency of blue hydrogen may be increased.

The present disclosure has a sufficient possibility for marketing or sales of the carbon dioxide capture and carbon resource utilization system by utilizing conventional hydrogen generation plants, and is also feasible to the extent that the present disclosure is capable of being clearly realized in reality, so that the present disclosure has industrial applicability.

## Claims

1. A system for generation of blue hydrogen through natural gas reforming, carbon dioxide capture, carbon resource utilization, and reaction product storage, the system comprising:
a natural gas storage container configured to store Liquefied Natural Gas (LNG) containing shale gas;
a hydrocarbon reformer configured to generate a gas mixture containing hydrogen and carbon dioxide by a reacting water supplied from outside and natural gas or shale gas supplied from the natural gas storage container to each other;
a hydrogen filling station configured to receive and store hydrogen generated from the hydrocarbon reformer;
a reactor configured to capture carbon dioxide by receiving carbon dioxide generated from the hydrocarbon reformer and reacting the carbon dioxide with a basic alkali mixed solution, the reactor being configured to collect a reaction product containing the captured carbon dioxide, and the reactor being configured to separate a carbon dioxide reaction product and a waste solution from the reaction product;
a carbon resource storage container configured to store the carbon dioxide reaction product separated from the reactor; and
a hydrogen generator configured to generate hydrogen by using the carbon dioxide reaction product which is separated from the reactor and which is directly transferred to the hydrogen generator or by using the carbon dioxide reaction product transferred to the hydrogen generator via the carbon resource storage container, the hydrogen generator being configured to transfer the produced hydrogen to the hydrogen filling station.

2. The system of claim 1, wherein the hydrocarbon reformer comprises:
an extraction mechanism for extracting or separating hydrogen and carbon dioxide from the gas mixture; and
a transfer mechanism for supplying hydrogen extracted from the extraction mechanism to the hydrogen filling station and for supplying carbon dioxide separated from hydrogen from the generated gas mixture to the reactor.

3. The system of claim 1, wherein the reactor comprises:
a mixer configured to supply the basic alkali mixed solution;
an absorption column configured to capture carbon dioxide by reacting the basic alkali mixed solution supplied from the mixer with carbon dioxide transferred from the hydrocarbon reformer;
a separator configured to collect the reaction product containing carbon dioxide captured in the absorption column and configured to separate the carbon dioxide reaction product and the waste solution from the reaction product; and
the carbon resource storage container configured to store the separated carbon dioxide reaction product for utilizing the separated carbon dioxide reaction product.

4. The system of claim 3, wherein the mixer is configured to generate the basic alkali mixed solution by mixing a basic alkaline solution supplied from a basic alkaline solution storage with water supplied from a water supply source.

5. The system of claim 4, wherein the basic alkaline solution and water are mixed in a ratio of 1:1 to 1:5.

6. The system of claim 1, wherein an average pH of the basic alkali mixed solution is pH 12 to pH 13.5.

7. The system of claim 1, wherein the basic alkali mixed solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

8. The system of claim 3, wherein the absorption column is configured to supply the basic alkali mixed solution from the mixer by using a plurality of nozzles mounted on an upper portion of the absorption column.

9. The system of claim 3, wherein the basic alkali mixed solution is input by being adjusted through a valve in the mixer when a level of the basic alkali mixed solution in the absorption column is lowered to less than 90%, and inputting of the basic alkali mixed solution is stopped and, at the same time, a basic alkaline solution and water are mixed until a pH of the basic alkali mixed solution becomes pH 12 to pH 13.5 when the level of the basic alkali mixed solution becomes 100%.

10. The system of claim 3, wherein the absorption column is configured to capture carbon dioxide by reacting the basic alkali mixed solution supplied from the mixer with carbon dioxide which is transferred from the hydrocarbon reformer and in which micro bubbles are formed by allowing carbon dioxide to pass through a bubbler formed on a lower portion of the absorption column.

11. The system of claim 3, wherein the reactor comprises:
a monitoring part configured to monitor a level and a pH of the basic alkali mixed solution in the absorption column; and
a controller configured to adjust a supply amount of the basic alkali mixed solution by the monitoring part.

12. The system of claim 1, wherein the carbon dioxide reaction product comprises sodium carbonate (Na₂CO₃) or sodium bicarbonate (NaHCO₃).

13. The system of claim 1, wherein the hydrogen generator comprises:
a water electrolysis cell configured to generate hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor.

14. The system of claim 1, wherein the carbon resource storage container comprises:
a storage tank having a double wall structure of an inner wall and an outer wall so as to accommodate the carbon dioxide reaction product separated from the reactor;
an inlet unit connected to the storage tank and configured to load the carbon dioxide reaction product into the storage tank;
a discharge unit connected to the storage tank and configured to discharge the carbon dioxide reaction product in the storage tank; and
a control unit configured to control the inlet unit or the discharge unit during loading/unloading of the carbon dioxide reaction product.

15. The system of claim 14, wherein the inlet unit comprises:
an inlet valve configured to open and close a flow path for the carbon dioxide reaction product that is loaded inside the storage tank, thereby adjusting a flow rate of the carbon dioxide reaction product that is loaded;
an inlet flow rate sensor configured to measure the carbon dioxide reaction product loaded by the inlet valve and to generate a flow rate value; and
an inlet line connected to the storage tank so as to load the carbon dioxide reaction product.

16. The system of claim 14, wherein the discharge unit comprises:
a discharge line connected to the storage tank and configured to discharge the carbon dioxide reaction product to an outside of the storage tank;
a discharge pump provided on the discharge line and configured to forcibly discharge the carbon dioxide reaction product contained in the storage tank to the outside;
a discharge valve configured to open and close a flow path toward the discharge pump for the carbon dioxide reaction product accommodated in the storage tank; and
a vacuum pump connected to the discharge line between the storage tank and the discharge valve and configured to discharge air in the storage tank to the outside and to form a vacuum state.

17. The system of claim 15, wherein the inner wall of the storage tank comprises:
a level sensor configured to measure a level of the carbon dioxide reaction product loaded in the storage tank and to input a sensing value to the control unit; and
a pressure sensor configured to measure a pressure of the storage tank and to input a sensing value to the control unit.

18. The system of claim 17, wherein, when the sensing value of the level sensor falls below a predetermined value, the control unit controls the inlet valve such that the inlet valve is opened so that the carbon dioxide reaction product is loaded through the inlet line.

19. The system of claim 17, wherein, when the sensing value of the level sensor reaches a predetermined target level value or when the flow rate value measured by the inlet flow rate sensor reaches a predetermined target flow rate, the control unit closes the inlet valve so that the flow path introduced into the storage tank is blocked.

20. The system of claim 16, wherein, when the control unit receives a discharge signal of the carbon dioxide reaction product accommodated inside the storage tank, the control unit controls the discharge valve and the discharge pump so that the discharge valve is opened and the discharge pump is operated.

21. The system of claim 17, wherein, when the flow path of the carbon dioxide reaction product loaded inside the storage tank is opened and closed according to a flow path opening and closing operation of the inlet valve, a vacuum state inside the storage tank is released, so that the control unit drives a vacuum pump so that the sensing value of the pressure sensor reaches a target vacuum pressure.

22. A method for generation of blue hydrogen through natural gas reforming, carbon dioxide capture, carbon resource utilization, and reaction product storage, the method comprising:
a process A in which a natural gas storage container liquefies and stores a source gas containing shale gas;
a process B in which a hydrocarbon reformer reacts water input from outside with the source gas stored in the natural gas storage container so as to generate a gas mixture containing hydrogen and carbon dioxide and separates hydrogen in the gas mixture and then transfers hydrogen to a hydrogen filling station;
a process C in which a reactor captures carbon dioxide by reacting a basic alkali mixed solution with carbon dioxide generated from the hydrocarbon reformer in the process B and collects a reaction product containing the captured carbon dioxide;
a process D in which a hydrogen generator generates hydrogen by using the reaction product containing carbon dioxide captured by the reactor and transfers hydrogen to the hydrogen filling station; and
a process E in which a carbon resource storage container stores the reaction product containing carbon dioxide captured by the reactor or supplies the reaction product to the hydrogen generator so as to generate hydrogen.

23. The method of claim 22, wherein, in the process B, the gas mixture containing hydrogen and carbon dioxide is generated by a steam reforming reaction by the hydrocarbon reformer.

24. The method of claim 22, wherein, in the process C, the basic alkali mixed solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

25. The method of claim 22, wherein, in the process C, the reactor captures carbon dioxide by reacting carbon dioxide transferred from the hydrocarbon reformer with the basic alkali mixed solution supplied from a mixer, collects the reaction product containing the captured carbon dioxide, and separates a carbon dioxide reaction product and a waste solution from the reaction product.

26. The method of claim 22, wherein the process C comprises:
a process in which the basic alkali mixed solution is input by being adjusted through a valve in a mixer when a level of the basic alkali mixed solution in the reactor is lowered to less than 90% and in which inputting of the basic alkali mixed solution is stopped and, at the same time, a basic alkaline solution and water are mixed until a pH of the basic alkali mixed solution becomes pH 12 to pH 13.5 when the level of the basic alkali mixed solution becomes 100%.

27. The method of claim 22, wherein, in the process D, the hydrogen generator generates hydrogen gas by electrolysis using sodium carbonate (Na₂CO₃) or sodium bicarbonate (NaHCO₃) as an electrolyte, sodium carbonate (Na₂CO₃) or sodium bicarbonate (NaHCO₃) being the reaction product containing carbon dioxide captured by the reactor.
